# EUROPÄISCHE PATENTSCHRIFT

(11) **EP 3 030 370 B1**
(45) Veröffentlichungstag und Bekanntmachung des Hinweises auf die Patenterteilung: **08.11.2017**
(21) Anmeldenummer: 14741232.4
(22) Anmeldetag: 08.07.2014
(51) Int. Cl.: B23D 59/00, B27B 5/065

(54) **PLATTENAUFTEILANLAGE**
PANEL-DIVIDING SYSTEM
INSTALLATION DE DIVISION DE PLAQUES

(30) Priorität: 08.08.2013 DE 102013215715
(43) Veröffentlichungstag der Anmeldung: 15.06.2016
(73) Patentinhaber: HOLZMA Plattenaufteiltechnik GmbH, 75365 Calw-Holzbronn (DE)
(72) Erfinder: BLAICH, Markus, 75365 Calw-Stammheim (DE)
(74) Vertreter: DREISS Patentanwälte PartG mbB
(86) Internationale Anmeldenummer: PCT/EP2014/064509
(87) Internationale Veröffentlichungsnummer: WO 2015/018580

(56) Entgegenhaltungen:
- EP-A1- 2 433 731
- WO-A1-2012/163846
- DE-A1- 4 131 344
- JP-A- H11 170 201

## Beschreibung

Die Erfindung betrifft eine Plattenaufteilanlage nach dem Oberbegriff des Anspruchs 1. Eine solche Plattenaufteilanlage ist aus WO 2012/163846 A bekannt. Plattenaufteilanlagen in Form von Plattenaufteilsägen umfassen ein Vorritzsägeblatt und ein Hauptsägeblatt. Das Vorritzsägeblatt hat einen zum Teil konischen Querschnitt. Daher beeinflusst seine vertikale Position die Breite einer Vorritznut. Eine solche Plattenaufteilanlage ist aus der DE 10 2009 033 649 A1 bekannt. Die WO 2012/163846 A1 beschreibt eine Holzbearbeitungsmaschine mit einer Sägeblatt-Schnellabsenkung.

Das der Erfindung zu Grunde liegende Problem wird durch eine Plattenaufteilanlage mit den Merkmalen des Anspruchs 1 gelöst. Vorteilhafte Weiterbildungen der Erfindung sind in Unteransprüchen angegeben.

Gegenüber den bisher bekannten Plattenaufteilanlagen ermöglicht die vorliegende Erfindung eine preiswerte, genaue, klein bauende und weitgehend wartungsfreie Einstellung der vertikalen Position des Vorritzsägeblatts. Ferner kann die Verstelleinrichtung 1:1 gegen bestehende Verstelleinrichtungen ausgetauscht werden, da sie genau gleich groß baut.

Bei der erfindungsgemäßen Plattenaufteilanlage umfasst die Merkmale des Anspruchs 1. Eine solche Einstelleinrichtung ist mechanische besonders robust. Durch eine entsprechende Wahl der Gewindesteigung der Gewindehülse ist die Gewindehülse selbstsperrend, was die Robustheit nochmals erhöht.

In Weiterbildung hierzu wird vorgeschlagen, dass die Betätigungseinrichtung mindestens einen vorzugsweise orthogonal zu der vertikalen Drehachse angeordneten Aktor und eine durch den Aktor im Wesentlichen translatorisch und orthogonal zu der vertikalen Drehachse bewegbare und um eine im Wesentlichen vertikale Achse verschwenkbaren Rastklinke umfasst, die mit einem Rastzahnabschnitt auf einer Mantelfläche der Gewindehülse zusammenarbeitet. Hierdurch wird eine Art Schrittantrieb geschaffen, der eine schrittweise Drehverstellung der Gewindehülse um eine Rastzahnweite und somit auf einfache Weise eine präzise und vorhersehbare Einstellbarkeit gestattet.

In nochmaliger Weiterbildung hierzu wird vorgeschlagen, dass der Rastzahnabschnitt mindestens in einem von zwei vertikalen Endbereichen einen Rastzahn umfasst, dessen Flanke eine Schräge aufweist, derart, dass die Rastklinke dann, wenn sie auf die Schräge trifft, abrutscht und die Gewindehülse nicht weiter verdrehen kann. Es versteht sich, dass erfindungsgemäß nicht nur ein einzelner, sondern auch mehrere Rastzähne hintereinander eine solche schräge Flanke aufweisen können. Durch diese schräge Flanke rutscht die Rastklinke ab, verstellt also die Gewindehülse trotz Betätigung nicht, wodurch auf einfache Art und Weise und ohne Erzeugen von Zwangskräften eine maximale Endlage der Gewindehülse geschaffen wird.

Zur gegensinnigen Betätigung, also sowohl in der einen wie auch in der anderen Richtung, wird vorgeschlagen, sie ein Paar von Rastklinken mit jeweiligen Aktoren umfasst, die parallel zueinander auf gegenüberliegenden Seiten des Rastzahnabschnitts angeordnet sind und gegensinnig wirken.

In verschmutzungssensitiven Anwendungsbereichen ist es vorteilhaft, wenn der Hubaktor bzw. Hubzylinder und/oder der Aktor oder die Aktoren pneumatisch arbeiten. Weitere mögliche Antriebsprinzipien sind hydraulisch, elektromagnetisch, oder ein elektrischer Schrittmotor.

Möglich ist ferner, dass die Rastklinke oder die Rastklinken mit einer Feder verbunden sind, die die Rastklinke(n) gegen den Rastzahnabschnitt beaufschlagt bzw. beaufschlagen. Dies führt zu einem sichereren Betrieb.

Besonders klein baut die Verstelleinrichtung, wenn eine Betätigungs- bzw. Kolbenstange des Hubaktors bzw. Hubzylinders koaxial zu der Gewindehülse angeordnet ist, vorzugsweise durch diese hindurch geht.

Das Betriebsgeräusch wird gesenkt und der verschleißt reduziert, wenn die Verstelleinrichtung einen Dämpfungsabschnitt umfasst, der kurz bevor das Betätigungselement bzw. der der Kolben die Endposition erreicht, in einen Dämpfungsraum des Anschlags eintaucht.

Nachfolgend wird eine beispielhafte Ausführungsform der Erfindung anhand der beiliegenden Zeichnung erläutert. In der Zeichnung zeigen
Figur 1 eine Draufsicht auf eine Plattenaufteilanlage;
Figur 2 eine horizontale Ansicht auf eine Hauptsäge und eine Vorritzsäge der Plattenaufteilanlage von Figur 1;
Figur 3+4 perspektivische Darstellungen einer Verstelleinrichtung der Vorritzsäge von Figur 2;
Figur 5 eine Vorderansicht auf einen Wagen der Vorriszusäge zusammen mit der Verstelleinrichtung;
Figur 6 eine Seitenansicht auf die Verstelleinrichtung von Figur 3;
Figur 7 eine perspektivische Detailansicht der Verstelleinrichtung von Figur 3, wobei ein zweiter Aktor nicht dargestellt ist;
Figuren 8-10 Längsschnitte durch die Verstelleinrichtung von Figur 3;
Figur 11 einen Horizontalschnitt durch einen Bereich der Verstelleinrichtung von Figur 3;
Figur 12 ein vergrößertes Detail aus Figur 11;
Figuren 13-14 Draufsichten auf die Verstelleinrichtung von Figur 3.

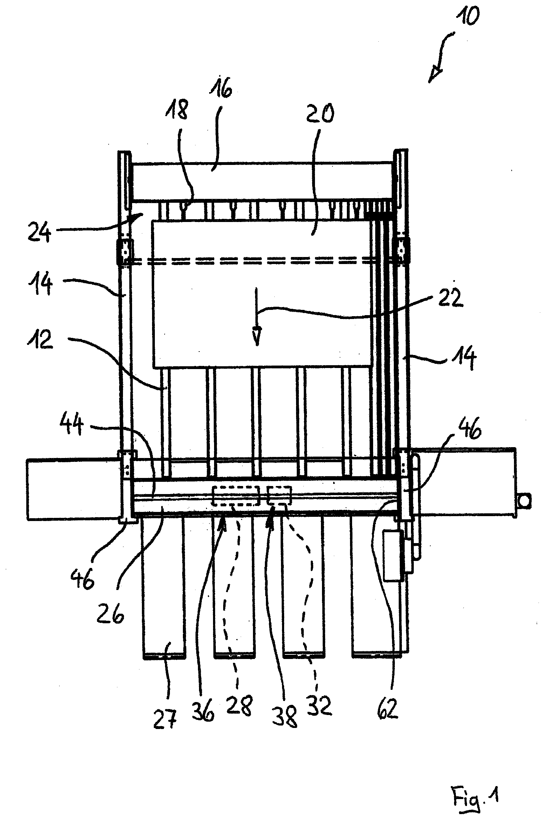

In Figur 1 trägt eine Plattenaufteilanlage insgesamt das Bezugszeichen 10. Sie umfasst einen Zuführtisch 12, der aus einer Vielzahl von Rollenbahnen (nicht dargestellt) besteht. Seitlich von dem Zuführtisch 12 sind horizontale Träger 14 vorhanden, auf denen quer zu ihnen ein portalartiger Träger 16 beweglich geführt ist. Der Träger 16 wird auch als Programmschieber 16 bezeichnet. An dem Programmschieber 16 sind Spannzangen 18 befestigt. Diese können einen auf dem Zuführtisch 12 liegenden Stapel 20 aus plattenförmigen Werkstücken greifen und sowohl in einer Förderrichtung (Pfeil 22) als auch entgegen dieser Förderrichtung 22 bewegen. Der Programmschieber 16 und die Spannzangen 18 definieren insoweit eine Vorschubvorrichtung 24.

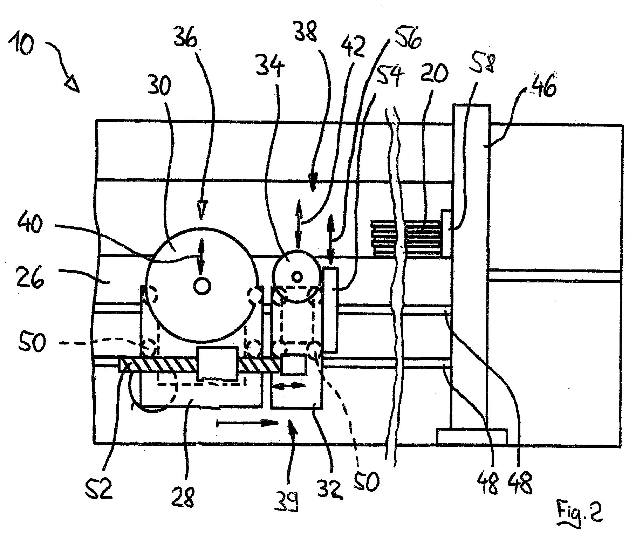

An den Zuführtisch 12 schließt sich in Förderrichtung 22 ein Maschinentisch 26 an, dessen Oberseite in der gleichen Ebene wie der Zuführtisch 12 liegt. An diesen schließt sich wiederum ein Entnahmetisch 27 an. Unterhalb des Maschinentisches 26 ist ein Wagen 28 angeordnet, der eine nur in Figur 2 gezeichnete Hauptsäge 30 trägt. Ferner ist unterhalb des Maschinentisches 26 ein Wagen 32 angeordnet, der eine ebenfalls nur in Figur 2 gezeichnete Vorritzsäge 34 trägt. Wagen 28 und Hauptsäge 30 gehören zu einer Hauptsägeeinrichtung 36, Wagen 32 und Vorritzsäge 34 gehören zu einer Vorritzsägeeinrichtung 38, und alle zusammen bilden einen Sägewagen 39.

Die Hauptsäge 30 und die Vorritzsäge 34 umfassen, wie aus Figur 2 ersichtlich ist, jeweilige Sägeblätter, die um eine zur Förderrichtung 22 parallele Achse drehbar sind. Darüber hinaus ist die Hauptsäge 30 relativ zum Hauptsägewagen 28 in vertikaler Richtung durch einen nicht gezeigten Antrieb beweglich, was durch einen Doppelpfeil 40 angedeutet ist.

Analog hierzu ist auch die Vorritzsäge 34 relativ zum Vorritzsägewagen 32 vertikal beweglich, was durch einen Doppelpfeil 42 angedeutet ist. Im Maschinentisch 26 ist ein sich quer zur Förderrichtung 22 erstreckender Sägeschlitz 44 (Figur 1) vorhanden, durch den die Hauptsäge 30 und die Vorritzsäge 34 nach oben hindurchtreten und zum Bearbeiten des Werkstücks 20 in dieses eintauchen können.

Figur 2 zeigt eine Ansicht auf die Hauptsägeeinrichtung 36, die Vorritzsägeeinrichtung 38, den Maschinentisch 26 und andere Strukturen in einer Sichtrichtung entgegen der Förderrichtung 22. Man erkennt, dass der Maschinentisch 26 seitlich von zwei Maschinenfüßen 46 gehalten ist. Ferner erkennt man zwei quer zur Förderrichtung 22 verlaufende Schienen 48, welche Führungen für den Sägewagen 39 bilden. Sowohl der Hauptsägewagen 28 als auch der Vorritzsägewagen 32 sind über jeweils vier Laufrollen 50 auf den Schienen 48 gelagert, von denen aus Darstellungsgründen jeweils nur eine mit einem Bezugszeichen versehen ist. Die beiden Wagen 28 und 32 sind also auf derselben Führung, nämlich den Schienen 48 geführt. Parallel zu den beiden Schienen 48 verläuft eine in der Zeichnung nicht dargestellte Zahnstange, welche mit einem Ritzel zusammenwirkt, welches mit einem Antriebsmotor am Hauptsägewagen 28 zusammenwirkt. Hierdurch wird ein Antrieb gebildet, über den der Hauptsägewagen 28 in horizontaler Richtung entlang des Sägeschlitzes 44 bewegt werden kann.

Der Vorritzsägewagen 32 ist mit dem Hauptsägewagen 28 mechanisch, nämlich über eine Spindelstange 52 gekoppelt. Wie aus Figur 2 ersichtlich ist, verfügt die Vorritzsägeeinrichtung 38 ferner über eine Andrückeinrichtung 54 in Form eines vertikal ausfahrbaren Schwerts, entsprechend dem Doppelpfeil 56 in Figur 2. Wie weiter unten noch erläutert werden wird, arbeitet diese Andrückeinrichtung 54 mit einem Winkellineal 58 zusammen, welches sich parallel zu dem in Figur 1 rechten Träger 14 erstreckt und welches exakt rechtwinklig zu den Schienen 48 beziehungsweise zum Sägeschlitz 44 verläuft.

Der Betrieb der Plattenaufteilanlage 10 ist weitgehend automatisiert. Er wird gesteuert von einer Steuer- und Regeleinrichtung, welche in der Zeichnung nicht dargestellt ist. Die einzelnen Verfahrensschritte sind in Form eines Computerprogrammes programmiert, welches auf einem Speicher der Steuer- und Regeleinrichtung abgelegt ist. Die Steuer- und Regeleinrichtung erhält Signale von zahlreichen Sensoren, die an der Plattenaufteilanlage 10 verbaut sind, und die beispielsweise die aktuelle horizontale Position der Vorschubvorrichtung 24, des Hauptsägewagens 28, des Vorritzsägewagens 32 und die entsprechende horizontale Relativlage der Vorritzsäge 34 zur Hauptsäge 30 erfassen.

Auch die vertikalen Positionen von Hauptsäge 30, Vorritzsäge 34 und Andrückschwert 54 werden durch entsprechende Sensoren erfasst. Entsprechend werden von der Steuer- und Regeleinrichtung unter anderem auch der nicht gezeigte Antrieb des Hauptsägewagens 28 angesteuert, mit dem dieser horizontal längs der Schienen 48 verfahren werden kann, und der Antrieb für die Spindelstange 52, wodurch ein horizontaler Abstand D zwischen Vorritzsäge 34 und Hauptsäge 30 verändert werden kann.

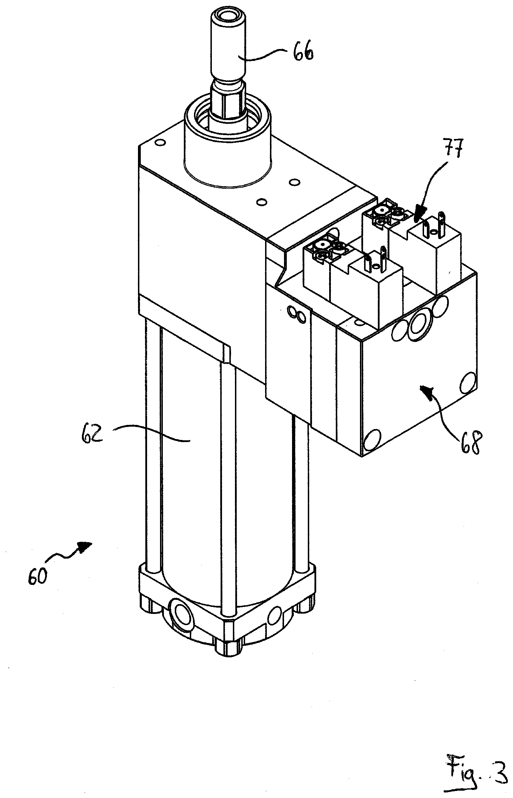

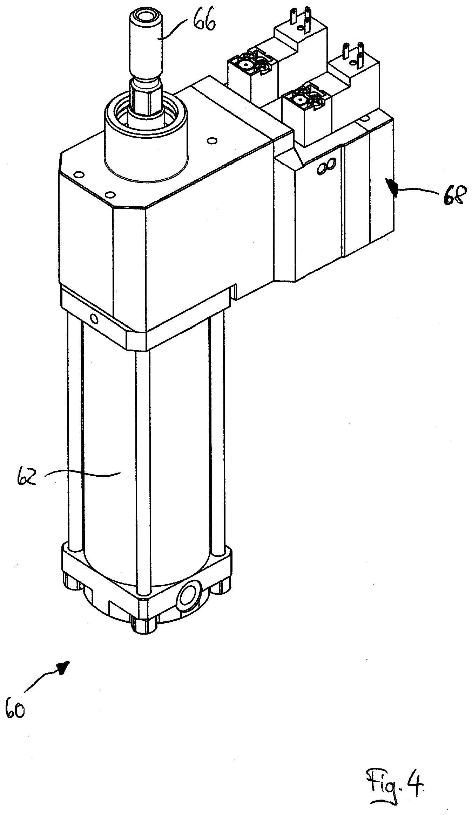

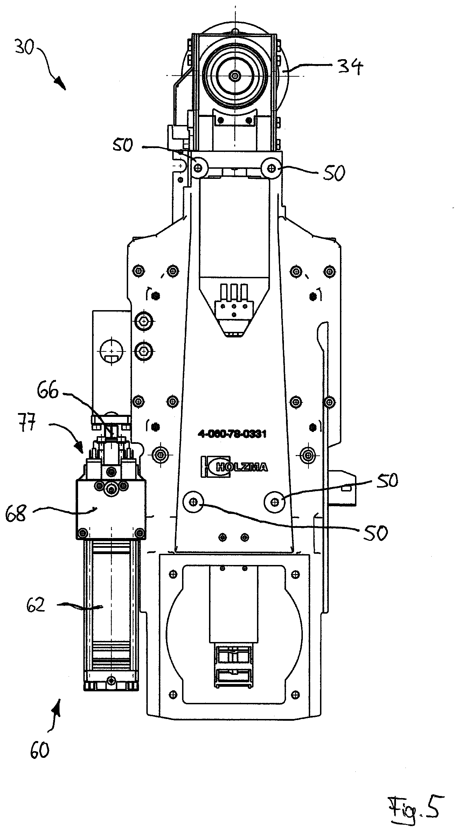

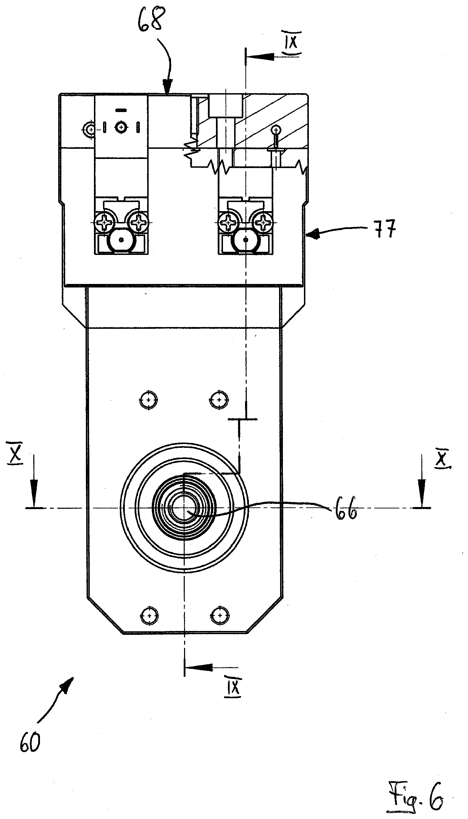

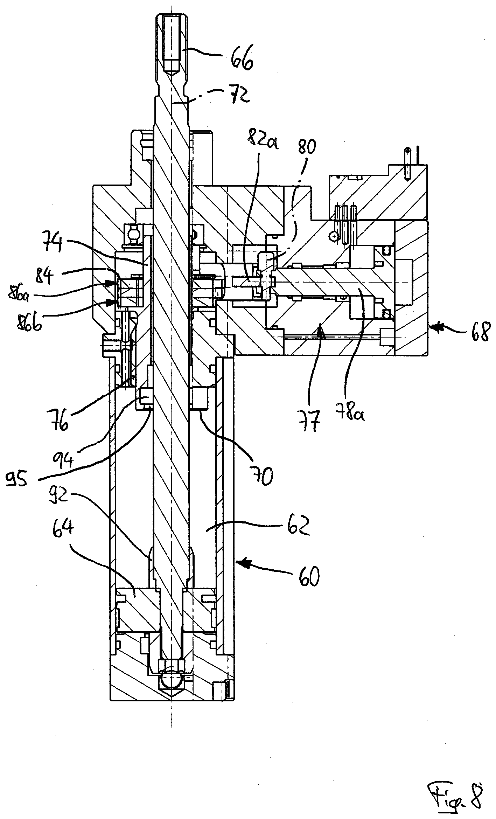

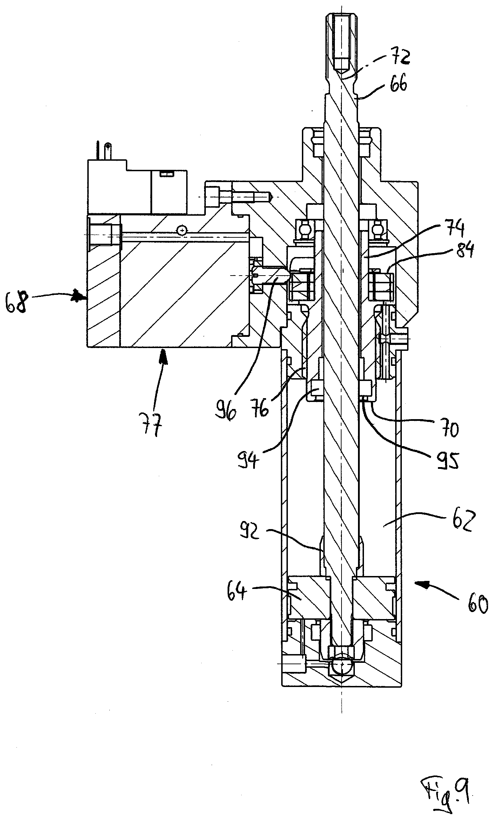

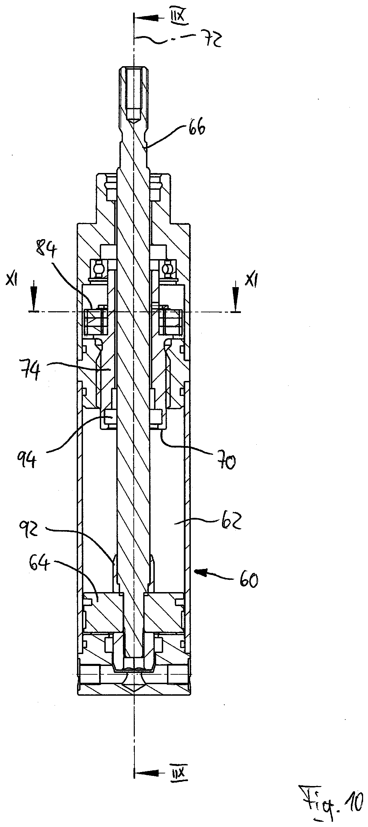

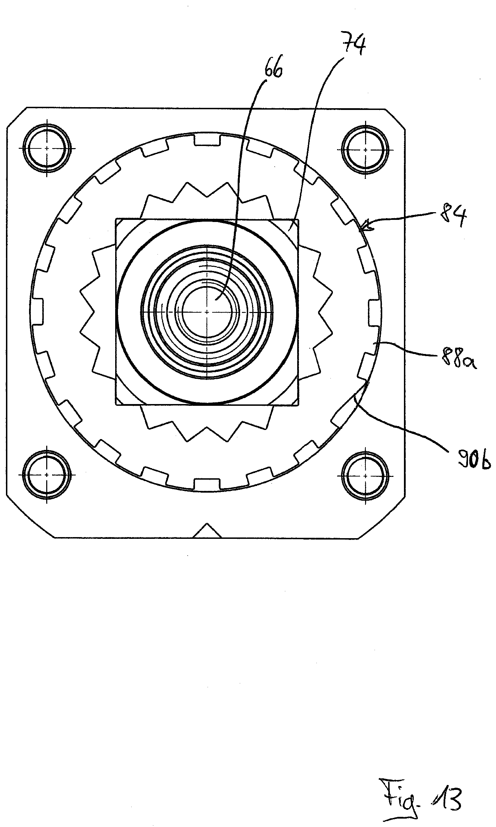

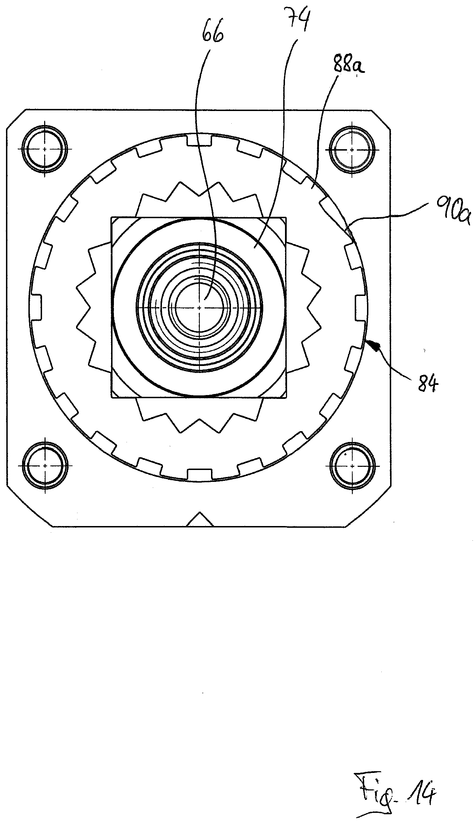

Zur Verstellung der vertikalen Position des Vorritzsägeblatts 34 dient eine Verstelleinrichtung 60 (Figuren 3-14). Sie umfasst einen pneumatischen Hubzylinder 62, der einen Hubaktor darstellt, mit einem Betätigungselement in Form eines Kolbens 64 (bspw. Figur 8), einer Betätigungs- bzw. Kolbenstange 66 und einen mittels einer fernbedienbaren Einstelleinrichtung 68 einstellbaren Anschlag 70 (bspw. Figur 8) zum Festlegen einer oberen Endposition des Kolbens 64. Das Sägeblatt der Vorritzsäge 34 ist auf einem vertikal beweglichen Schlitten (nicht dargestellt) angeordnet, der wiederum mit der Kolbenstange 66 gekoppelt ist.

Die Einstelleinrichtung 68 umfasst eine um eine vertikale Drehachse 72 drehbare und längs zu dieser bewegbare Gewindehülse 74 (Figuren 8 bis 12), die mit dem Anschlag 70 gekoppelt ist (bzw. an deren unterem Ende der Anschlag 70 ausgebildet ist) und mit einem stationären Gewinde 76 zusammenwirkt, und eine Betätigungseinrichtung 77, mit der die Gewindehülse 74 um die vertikale Drehachse 72 in Drehung versetzt werden kann. Die Kolbenstange 66 des Hubzylinders 62 ist koaxial zu der Gewindehülse 74 angeordnet und geht durch diese hindurch.

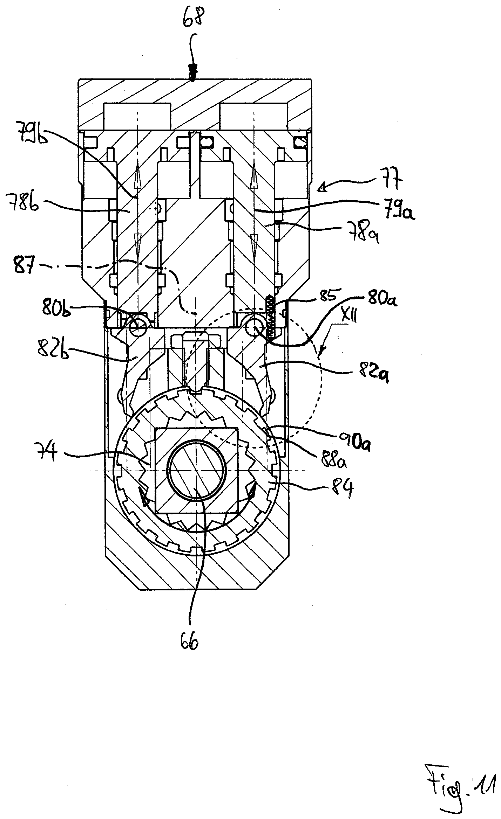

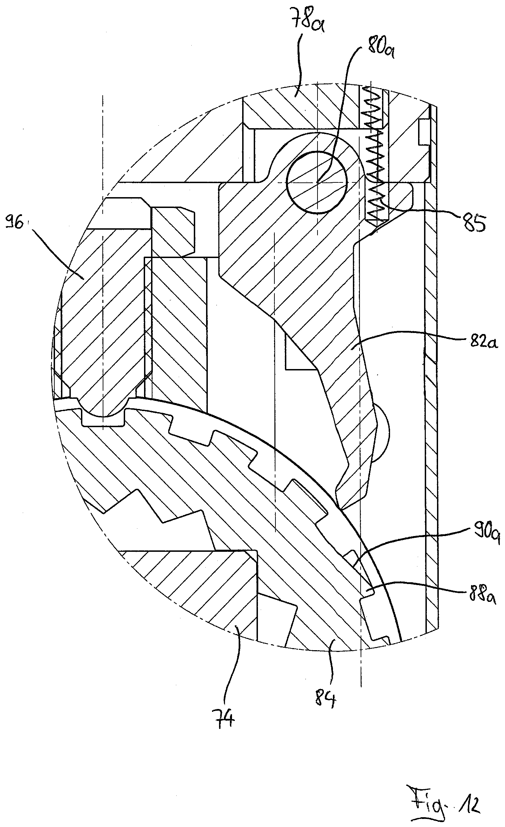

Die Betätigungseinrichtung 77 umfasst zwei Aktoren 78a und 78b in Form von pneumatischen und elektromagnetisch betätigten Schaltzylindern und eine durch den jeweiligen Aktor 78a bzw. 78b im Wesentlichen translatorisch horizontal bewegbare (Doppelpfeile 79 in Figur 11) und um eine im Wesentlichen vertikale Achse 80 verschwenkbaren Rastklinke 82a und 82b (vgl. Figuren 8 sowie 11 und 12). Diese arbeiten mit einem Rastzahnabschnitt 84 auf einer Mantelfläche der Gewindehülse 74 zusammen. Die Rastklinken 82a und 82b sind parallel zueinander und in Bezug auf eine vertikale Mittelebene (BZ 87 in Figur 11) auf gegenüberliegenden Seiten des Rastzahnabschnitts 84 angeordnet und wirken gegensinnig. Die Rastklinken 82a und 82b sind jeweils mit einer Feder 85 (vorliegend einer in Figur 12 symbolisch dargestellten Druckfeder) verbunden, die die jeweilige Rastklinke 82a und 82b gegen den Rastzahnabschnitt 84 beaufschlagt und so einen Kontakt der Rastklinke 82a mit dem Rastzahnabschnitt 84 während eines Verstellvorgangs gewährleistet.

Der Rastzahnabschnitt 84 umfasst eine Vielzahl von über seinen Umfang gleichmäßig verteilt angeordneten Rastzähnen 88, von denen mindestens in den zwei vertikalen Endbereichen 86a und 86b (siehe Figur 8) des Rastzahnabschnitts jeweils ein Rastzahn 88a bzw. 88beine Flanke mit einer Schräge 90a bzw. 90b aufweist (siehe Figuren 11, 12 und 13), derart, dass die Rastklinke 82a bzw. 82b dann, wenn sie auf die Schräge 90a bzw. 90b trifft, abrutscht und die Gewindehülse 74 nicht weiter verdrehen kann. Hierdurch wird verhindert, dass sich die Gewindehülse 74 weiter als in eine obere oder untere Endstellung bewegen kann. Es versteht sich, dass zur Erhöhung der Betriebszuverlässigkeit nicht nur eine Flanke, sondern eine Mehrzahl von Flanken aufeinanderfolgender Rastzähne mit derartigen Schrägen versehen sein können.

Wie beispielsweise aus den Figuren 8, 9 und 10 hervorgeht, weist die Verstelleinrichtung 60 unmittelbar oberhalb vom Kolben 64 einen Dämpfungsabschnitt 92 auf, der als hülsenförmige Manschette ausgebildet ist und kurz bevor der Kolben 64 die obere Endposition erreicht, indem der Kolben 64 am Anschlag 70 anschlägt, in einen ringförmigen Dämpfungsraum 94 des Anschlags 70 eintaucht. An dessen unterem Ende ist eine Öffnung 95 vorhanden, deren Innendurchmesser etwas größer ist als der Außendurchmesser des Dämpfungsabschnitts 94.

Die Aktoren 78a und 78b fahren bei einer Betätigung stoßartig zur Gewindehülse 74 hin aus, wodurch diese um die Schrittweite eines Rastzahns 88 um die Achse 72 verdreht wird. Durch die Aktoren 78a und 78b wird also eine Art Schrittmotor realisiert. Die Gewindesteigung des Gewindes 76 ist vorliegend beispielsweise so gewählt, das sich bei einer Betätigung eines Aktors 78 die vertikale Position der Gewindehülse 74 und mit ihr die des Anschlags 70 um 0,2mm verändert.

Zur Festlegung der oberen Endlage des Vorritzsägeblatts 34 wird entweder der Aktor 78a oder der Aktor 78b betätigt. Bei der Betätigung des einen Aktors wird die Gewindehülse 74 und mit ihr der obere Anschlag 70 nach unten, bei der Betätigung des jeweils anderen Aktors nach oben bewegt. Wird nun der Hubzylinder 62 so betätigt, dass der Kolben 64 mit der Kolbenstange 66 und somit das Vorritzsägeblatt 34 nach oben ausfahren, taucht zunächst der Dämpfungsabschnitt 92 in den Dämpfungsraum 94 ein, wodurch die Bewegung des Kolbens 64 und der Kolbenstange 66 (und somit auch die vertikale Bewegung des Vorritzsägeblatts 34) verlangsamt wird, weil zunächst die in dem Dämpfungsraum 94 enthaltene Luft durch den Spalt zwischen dem Dämpfungsabschnitt 92 und der Öffnung 95 an der Unterseite des Dämpfungsraums 94 aus dem Dämpfungsraum 94 entweichen muss. Durch eine entsprechende Gestaltung der Außenkontur des Dämpfungsabschnitts 92 kann der Verlauf der Verzögerung des Kolbens 64 beeinflusst werden. Dann schlägt der Kolben 64 am Anschlag 70 an, wodurch die vorab mittels der Einstelleinrichtung 68 eingestellte obere Endlage erreicht ist.

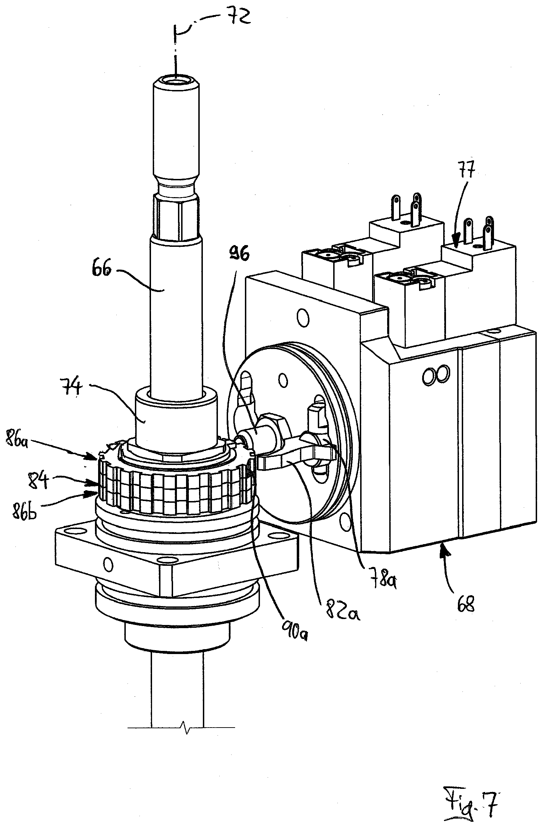

Eine federndes Druckstück 96, welches mittig zwischen den beiden Rastklinken 82a und 82b angeordnet (siehe bspw. Figur 7) und ebenfalls horizontal beweglich ist, sichert die Gewindehülse 74 gegen ein unbeabsichtigtes Verdrehen, gestattet aber ein durch die Rastklinken 82a und 82b erzwungenes Verdrehen.

Es versteht sich auch, dass das Funktionsprinzip des einstellbaren Anschlags auch zur Festlegung der unteren Endlage des Vorritzsägeblatts 34 verwendet werden kann. Ferner versteht es sich, dass das Funktionsprinzip des einstellbaren Anschlags auch zur Festlegung der oberen und/oder unteren Endlage des Hauptsägeblatts 30 eingesetzt werden kann, sowie überhaupt für die Festlegung von Endlagen anderer Elemente, also auch von horizontalen (vorderen und/oder hinteren) Endlagen, indem die Verstelleinrichtung um 90° gekippt angeordnet wird. Ferner lässt sich das Funktionsprinzip auch bei und/oder mit anderen Antriebsarten einsetzen, also bei und/oder mit hydraulischen oder elektromagnetischen Antrieben oder Kombinationen von solchen Antrieben.

## Patentansprüche

1. Plattenaufteilanlage (10), mit mindestens einem Sägeblatt (34) und einer Verstelleinrichtung (60) zum Verstellen der vertikalen Position des Sägeblatts (34), wobei die Verstelleinrichtung (60) einen Hubaktor, insbesondere Hubzylinder (62), mit einem Betätigungselement, insbesondere einem Kolben (64), und einen mittels einer fernbedienbaren Einstelleinrichtung (68) einstellbaren Anschlag (70) zum Festlegen einer vorzugsweise oberen Endposition des Betätigungselements (64) umfasst, **dadurch gekennzeichnet, dass** die Einstelleinrichtung (68) eine Gewindehülse (74), die mit dem Anschlag (70) gekoppelt ist und mit einem stationären Gewinde (76) zusammenwirkt, und eine Betätigungseinrichtung (77) umfasst, mit der die Gewindehülse (74) um eine vertikale Drehachse (72) in Drehung versetzt werden kann.

2. Plattenaufteilanlage (10) nach Anspruch 1, **dadurch gekennzeichnet, dass** die Betätigungseinrichtung (77) mindestens einen vorzugsweise orthogonal zu der vertikalen Drehachse (72) angeordneten Aktor (78) und eine durch den Aktor (78) im Wesentlichen translatorisch und orthogonal zu der vertikalen Drehachse (72) bewegbare und um eine im Wesentlichen vertikale Achse (80) verschwenkbaren Rastklinke (82) umfasst, die mit einem Rastzahnabschnitt (84) auf einer Mantelfläche der Gewindehülse (74) zusammenarbeitet.

3. Plattenaufteilanlage (10) nach Anspruch 2, **dadurch gekennzeichnet, dass** der Rastzahnabschnitt (84) mindestens in einem von zwei vertikalen Endbereichen (86) einen Rastzahn (88) umfasst, dessen Flanke eine Schräge (90) aufweist, derart, dass die Rastklinke (82) dann, wenn sie auf die Schräge (90) trifft, abrutscht und die Gewindehülse (74) nicht weiter verdrehen kann.

4. Plattenaufteilanlage (10) nach einem der Ansprüche 2 oder 3, **dadurch gekennzeichnet, dass** sie ein Paar von Rastklinken (82a, 82b) mit jeweiligen Aktoren (78a, 78b) umfasst, die parallel zueinander auf gegenüberliegenden Seiten des Rastzahnabschnitts (84) angeordnet sind und gegensinnig wirken.

5. Plattenaufteilanlage (10) nach einem der Ansprüche 2 bis 4, **dadurch gekennzeichnet, dass** der Hubaktor bzw. Hubzylinder (62) und/oder der Aktor oder die Aktoren (78a, 78b) pneumatisch arbeiten.

6. Plattenaufteilanlage (10) nach einem der Ansprüche 2 bis 5, **dadurch gekennzeichnet, dass** die Rastklinke oder die Rastklinken (82) mit einer Feder (85) verbunden sind, die die Rastklinke(n) (82) gegen den Rastzahnabschnitt (84) beaufschlagt bzw. beaufschlagen.

7. Plattenaufteilanlage (10) nach einem der vorhergehenden Ansprüche, **dadurch gekennzeichnet, dass** eine Betätigungs- bzw. Kolbenstange (66) des Hubaktors bzw. Hubzylinders (62) koaxial zu der Gewindehülse (74) angeordnet ist, vorzugsweise durch diese hindurch geht.

8. Plattenaufteilanlage (10) nach einem der vorhergehenden Ansprüche, **dadurch gekennzeichnet, dass** die Verstelleinrichtung (60) einen Dämpfungsabschnitt (92) umfasst, der kurz bevor das Betätigungselement bzw. der der Kolben (64) die Endposition erreicht, in einen Dämpfungsraum (94) des Anschlags (70) eintaucht.

## Claims

1. Panel dividing system (10), comprising at least one saw blade (34) and an adjusting device (60) for adjusting the vertical position of the saw blade (34), the adjusting device (60) comprising a lifting actuator, in particular a lifting cylinder (62), having an actuating element, in particular a piston (64), and a stop (70), settable by means of a remote-control setting device (68) for defining a preferably top end position of the actuating element (64), **characterized in that** the setting device (68) comprises a threaded sleeve (74), which is coupled with the stop (70) and cooperates with a stationary thread (76), and an actuating device (77), by means of which the threaded sleeve (74) can be rotated about a vertical axis of rotation (72).

2. Panel dividing system (10) according to claim 1, **characterized in that** the actuating device (77) comprises at least one actuator (78) that is preferably arranged orthogonally to the vertical axis of rotation (72), and one latch (82) which, by means of the actuator (78), can be moved substantially translationally and orthogonally to the vertical axis of rotation (72) and can be pivoted about a substantially vertical axis (80), which latch cooperates with a latching tooth portion (84) on an outer surface of the threaded sleeve (74).

3. Panel dividing system (10) according to claim 2, **characterized in that** the latching tooth portion (84) comprises, in at least one of two vertical end regions (86), a latching tooth (88) of which the flank has an inclined surface (90) such that the latch (82) slides down when it meets the inclined surface (90) and the threaded sleeve (74) can no longer rotate.

4. Panel dividing system (10) according to claim 2 or claim 3, **characterized in that** it comprises a pair of latches (82a, 82b) comprising respective actuators (78a, 78b) that are arranged in parallel with one another on opposite sides of the latching tooth portion (84) and act in opposing directions.

5. Panel dividing system (10) according to any of claims 2 to 4, **characterized in that** the lifting actuator or lifting cylinder (62) and/or the actuator or actuators (78a, 78b) operate pneumatically.

6. Panel dividing system (10) according to any of claims 2 to 5, **characterized in that** the latch or latches (82) are connected to a spring (85) which presses the latch(es) (82) against the latching tooth portion (84).

7. Panel dividing system (10) according to any of the preceding claims, **characterized in that** an actuating rod or piston rod (66) of the lifting actuator or lifting cylinder (62) is coaxial with the threaded sleeve (74), preferably extending through said sleeve.

8. Panel dividing system (10) according to any of the preceding claims, **characterized in that** the adjusting device (60) comprises a damping portion (92) which, shortly before the actuating element or piston (64) reaches the end position, dips into a damping chamber (94) of the stop (70).

## Revendications

1. Installation à diviser des panneaux (10) comprenant au moins une lame de scie (34) et un dispositif d'ajustage (60) destiné à ajuster la position verticale de la lame de scie (34), dans laquelle ledit dispositif d'ajustage (60) comprend un actionneur de levage, en particulier un vérin de levage (62), ayant un élément d'actionnement, en particulier un piston (64), ainsi qu'une butée (70) qui peut être réglée au moyen d'un dispositif de réglage (68) télécommandable et est destinée à fixer une position extrême de préférence supérieure de l'élément d'actionnement (64), **caractérisée par le fait que** ledit dispositif de réglage (68) comprend un manchon fileté (74) qui est couplé à la butée (70) et agit de concert avec un filet stationnaire (76), ainsi qu'un dispositif d'actionnement (77) par l'intermédiaire duquel le manchon fileté (74) peut être mis en rotation autour d'un axe vertical de rotation (72).

2. Installation à diviser des panneaux (10) selon la revendication 1, **caractérisée par le fait que** ledit dispositif d'actionnement (77) comprend au moins un actionneur (78) qui est disposé de préférence orthogonalement par rapport à l'axe vertical de rotation (72) et un cliquet d'arrêt (82) qui peut être déplacé par ledit actionneur (78) pour l'essentiel de manière translatoire et orthogonale par rapport à l'axe vertical de rotation (72) et peut pivoter autour d'un axe (80) pour l'essentiel vertical et qui agit de concert avec une section à dent d'arrêt (84) sur une surface latérale du manchon fileté (74).

3. Installation à diviser des panneaux (10) selon la revendication 2, **caractérisée par le fait que** la section à dent d'arrêt (84) comprend une dent d'arrêt (88) dans au moins une de deux zones d'extrémité (86) verticales, dont le flanc présente un biseau (90) de telle sorte que le cliquet d'arrêt (82), lorsqu'il rencontre le biseau (90), glisse et que le manchon fileté (74) ne peut pas continuer à tourner.

4. Installation à diviser des panneaux (10) selon l'une quelconque des revendications 2 ou 3, **caractérisée par le fait qu'**elle comprend une paire de cliquets d'arrêt (82a, 82b) ayant des actionneurs (78a, 78b) respectifs, qui sont disposés parallèlement entre eux de côtés opposés de la section à dent d'arrêt (84) et agissent en sens inverse.

5. Installation à diviser des panneaux (10) selon l'une quelconque des revendications 2 à 4, **caractérisée par le fait que** l'actionneur de levage ou bien le vérin de levage (62) et/ou l'actionneur ou les actionneurs (78a, 78b) travaillent de façon pneumatique.

6. Installation à diviser des panneaux (10) selon l'une quelconque des revendications 2 à 5, **caractérisée par le fait que** le cliquet d'arrêt ou les cliquets d'arrêt (82) sont reliés à un ressort (85) qui sollicite ou bien sollicitent le(s) cliquet(s) d'arrêt (82) contre la section à dent d'arrêt (84).

7. Installation à diviser des panneaux (10) selon l'une quelconque des revendications précédentes, **caractérisée par le fait qu'**une tige d'actionnement ou bien de piston (66) de l'actionneur de levage ou bien du vérin de levage (62) est disposée de façon coaxiale par rapport au manchon fileté (74), de préférence passe à travers celui-ci.

8. Installation à diviser des panneaux (10) selon l'une quelconque des revendications précédentes, **caractérisée par le fait que** ledit dispositif d'ajustage (60) comprend une section d'amortissement (92) qui s'enfonce dans un espace d'amortissement (94) de la butée (70) peu de temps avant que l'élément d'actionnement ou bien le piston (64) atteigne la position extrême.
